# EUROPÄISCHE PATENTANMELDUNG

(11) **EP 0 578 841 A1**
(43) Veröffentlichungstag der Anmeldung: **19.01.1994**
(21) Anmeldenummer: 92111832.9
(22) Anmeldetag: 11.07.1992
(51) Int. Cl.: G06F 15/62

(54) **Verfahren zur Erzeugung von Höhenlinien mit einem Computersystem**

(71) Anmelder: INTERNATIONAL BUSINESS MACHINES CORPORATION, Armonk, N.Y. 10504 (US)
(72) Erfinder: Schauer, Ulrich, W-6920 Sinsheim (DE); Lattermann, Dieter, W-6909 Walldorf (DE)
(74) Vertreter: Schäfer, Wolfgang, Dipl.-Ing.

(57) **Zusammenfassung**

Es wird ein Computersystem zur Erzeugung und Darstellung von Höhenlinien einer Sattelfläche beschrieben. Die Höhenlinien entstehen dabei durch den Schnitt der Sattelfläche mit einer Ebene. In Abhängigkeit davon, ob die Schnittebene oberhalb oder unterhalb eines Sattelpunktes der Sattelfläche angeordnet ist, entstehen jeweils zwei verschiedene Höhenlinien. Mit Hilfe der Höhe des Sattelpunktes kann das Computersystem entscheiden, welche der möglichen Höhenlinien für den jeweiligen Fall die richtigen sind. Die Höhenlinien werden dabei in der Form von jeweils zwei Schnittpunkten festgelegt, wobei zusammengehörende Schnittpunkte paarweise im Computersystem abgespeichert sind. Durch Umordnen, Vertauschen, Aneinanderreihen, usw. dieser Schnittpunkt-Paare werden Nachbarschaftsbeziehungen ermittelt, die zu jedem Schnittpunkt die zugehörigen Nachbarn festlegt. Mit Hilfe dieser Nachbarschaftsbeziehungen ist es dem Computersystem möglich, die aus den Höhenlinien zusammengesetzten Höhenlinien-Polygonzüge beispielsweise auf einem Bildschirm darzustellen.

## Beschreibung

Die Erfindung betrifft ein Verfahren zur digitalen Erzeugung von Höhenlinien aus Höhepunkten über einem Mehrecksnetz.

Derartige Verfahren werden beispielsweise von einem Computersystem zur Bildverarbeitung durchgeführt. Ziel des Verfahrens ist es, bei einer durch die Höhepunkte gebildeten unebenen Fläche die Linien gleicher Höhe zu berechnen und beispielsweise auf einem Bildschirm anzuzeigen. Dies ist vergleichbar mit einer geographischen Karte, auf der die Linien gleicher Höhe einer aus Bergen und Tälern bestehenden Landschaft eingezeichnet sind.

Ein besonderes Problem bei der Berechnung derartiger Höhenlinien stellen sogenannten Sattelflächen dar, die dadurch entstehen, daß beispielsweise ein quadratisches Blatt Papier an zwei zueinander diagonalen Ecken nach oben und an den anderen beiden diagonalen Ecken nach unten gebogen wird. Etwa in der Mitte der Papierfläche verbleibt ein sogenannter Sattelpunkt, der von den Biegungen unbeeinflußt ist.

Zur Erzeugung von Höhenlinien ist es erforderlich, die Sattelfläche mit einer Ebene der gewünschten Höhe zu schneiden. Befindet sich diese Schnittebene oberhalb des Sattelpunktes, so werden die nach oben abgebogenen Ecken der Papierfläche geschnitten. Befindet sich die Schnittebene hingegen unterhalb des Sattelpunktes, so werden die nach unten abgebogenen Ecken der Papierfläche geschnitten. Abhängig davon, ob die nach oben oder die nach unten abgebogenen Ecken der Papierfläche geschnitten werden, ergeben sich völlig unterschiedliche Höhenlinien. Im vorliegenden Beispielfall sind die den nach oben abgebogenen Ecken zugeordneten Höhenlinien etwa in einem rechten Winkel zu den den nach unten abgebogenen Ecken zugeordneten Höhenlinien angeordnet.

Unter anderem wegen des enormen Rechenaufwands berechnet ein Computersystem üblicherweise nicht die vollständigen Höhenlinien der Sattelfläche. Statt dessen berechnet das Computersystem die Schnittpunkte der die Sattelfläche begrenzenden Verbindungslinien mit der gewünschten Schnittebene. Das Ergebnis dieser Berechnung sind vier Schnittpunkte, von denen jeweils zwei benachbarte Schnittpunkte zu einer Höhenlinie verbunden werden müssen. Abhängig davon, welche benachbarten Schnittpunkte miteinander verbunden werden, ergeben sich die Höhenlinien bei einer Schnittfläche oberhalb des Sattelpunktes und bei einer Schnittfläche unterhalb des Sattelpunktes.

Die Entscheidung, welche der möglichen Höhenlinien im jeweiligen Fall die richtigen sind, wird meist mit Hilfe von sogenannten Pfadverfolgungsalgorithmen getroffen, bei denen das Computersystem die aus den einzelnen Höhenlinien zusammengesetzten Polygonzüge als Ganzes betrachtet. Es hat sich herausgestellt, daß derartige Pfadverfolgungsalgorithmen nicht fehlerfrei sind, und daß auch Veränderungen des den gesamten Berechnungen zugrunde liegenden Mehrecksnetzes zu Fehlern führen.

Aufgabe der Erfindung ist es, das eingangs genannte Verfahren derart zu verbessern, daß in jedem Fall eine Fehlerfreiheit gewährleistet ist.

Erfindungsgemäß wird diese Aufgabe dadurch gelöst, daß die Höhe des Sattelpunktes als Mittelwert der Höhen der die Sattelfläche aufspannenden Höhepunkte berechnet wird. Danach wird diese Höhe des Sattelpunktes mit einer der Höhen der Höhepunkte und mit der gewünschten Höhe der Schnittfläche verglichen. Falls die Höhe der Schnittebene sich zwischen der Höhe des Sattelpunktes und der Höhe des einen Höhepunktes befindet, so wird die zugehörige Höhenlinie dadurch festgelegt, daß sie die Verbindungslinie des Sattelpunktes und des einen Höhepunktes schneiden muß.

Mit Hilfe der als Mittelwert gebildeten Höhe des Sattelpunktes wird ein Entscheidungskriterium bereitgestellt, mit dessen Hilfe das Computersystem in jedem Fall die richtigen Höhenlinien festlegen kann. Befindet sich nämlich die Höhe der gewünschten Schnittebene nicht zwischen der Höhe des Sattelpunktes und der Höhe des einen Höhepunktes, so kann eine Höhenlinie, die an jeder Stelle die gewünschte Höhe aufweisen soll, nicht die Verbindungslinie des Sattelpunktes und des einen Höhepunktes schneiden.

Das Computersystem kann also ohne die Anwendung eines Pfadverfolgungsalgorithmus oder dergleichen einzig auf der Grundlage der Daten der relevanten Sattelfläche in jedem Fall korrekt entscheiden, welches die richtigen Höhenlinien sind. Diese Beschränkung auf eine einzige Sattelfläche hat den weiteren Vorteil, daß auch Veränderungen des den gesamten Berechnungen zugrunde liegenden Mehrecksnetzes keinerlei Fehler zur Folge haben.

Nachdem das Computersystem die richtigen Höhenlinien festgelegt hat, kann es bei einer Ausgestaltung der Erfindung den Schnittpunkt der Verbindungslinie des Sattelpunktes und des einen Höhepunktes mit der gewünschten Schnittebene berechnen. Zweckmäßig ist es dann, die Höhenlinie als gerade Linie zwischen den eingangs berechneten beiden benachbarten Schnittpunkten und dem nunmehr berechneten weiteren Schnittpunkt darzustellen.

Bei einer weiteren Ausgestaltung der Erfindung werden zu jedem der eingangs genannten Schnittpunkte die beiden Nachbar-Schnittpunkte berechnet. Ausgehend von den Paaren von Schnittpunkten, die aufgrund der sie verbindenden Höhenlinien zusammengehören, werden die Nachbar-Schnittpunkte durch Umordnungsmaßnahmen ermittelt.

Die gesamten Polygonzüge können dann zweckmäßigerweise durch ein einfaches Aneinandersetzen der einzelnen Höhenlinien erzeugt werden, wobei die Reihenfolge der einzelnen Höhenlinien durch die jeweiligen Nachbar-Schnittpunkte festgelegt wird.

Durch diese letztgenannten Maßnahmen wird eine wesentliche Verringerung der abzuspeichernden, wie auch der beispielsweise auf den Bildschirm auszugebenden Datenmenge erreicht. Gleichzeitig ist es aufgrund dieser Maßnahmen nicht mehr erforderlich, aufwendige Pfadverfolgungsalgorithmen oder dergleichen zur Bildung der Polygonzüge heranzuziehen. Dies hat eine wesentliche Verringerung der erforderlichen Rechenzeit zur Folge.

Weitere Ausgestaltungen und Vorteile der Erfindung ergeben sich aus der nachfolgenden Beschreibung von Ausführungsbeispielen, die in den Zeichnungen dargestellt sind. Dabei zeigen:
- Fig. 1: eine Tabelle der z-Werte von Höhepunkten über einem x, y-Rechtecksnetz;
- Fig. 2: die Darstellung der Höhepunkte der Fig. 1 in einem dreidimensionalen x, y, z-Koordinatensystem;
- Fig. 3: einen Ausschnitt aus dem Koordinatensystem der Fig. 2 mit einer von vier Höhepunkten aufgespannten Sattelfläche;
- Fign. 4a und 4b: die Sattelfläche der Fig. 3 mit einer ersten Schnittebene in einer dreidimensionalen Ansicht und in Draufsicht;
- Fign. 4c und 4d: die Sattelfläche der Fig. 3 mit einer zweiten Schnittebene in einer dreidimensionalen Ansicht und in Draufsicht;
- Fign. 5a und 5b: die Tabelle der Fig. 1 mit zusätzlich eingetragenen Nummern sämtlicher Schnittpunkte sowie mit schematisch eingetragenen Höhenlinien zwischen den Schnittpunkten;
- Fign. 6a bis 6c: Umgestaltungen der Nummern-Paare der zusammengehörigen Schnittpunkte;
- Fig. 7: eine Tabelle mit sämtlichen Schnittpunkten und den jeweils zugehörigen Nachbar-Schnittpunkten; und
- Fig. 8a und 8b: die Nummern-Folgen der Schnittpunkte der offenen und der geschlossenen Höhenlinien-Polygonzüge.

Ein Computersystem für die Bildverarbeitung enthält außer dem eigentlichen Prozessor unter anderem einen oder mehrere Speicher sowie ein Datenausgabegerät, beispielsweise einen Bildschirm. Der Speicher ist dazu vorgesehen, die die Bildpunkte eines Bildes betreffenden Daten abzuspeichern, während das Datenausgabegerät dazu vorgesehen ist, diese Bilddaten einem Benutzer als vollständiges Bild visuell darzustellen.

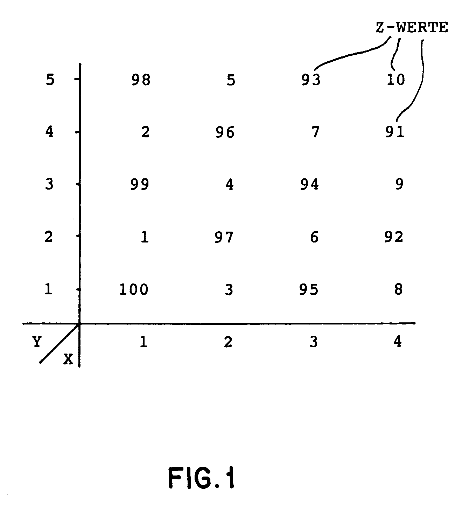

Im Speicher des Computersystems sei die in Fig. 1 gezeigte Tabelle abgespeichert. Die Tabelle stellt ein x, y-Rechtecksnetz dar, in das z-Werte in den Schnittpunkten des Netzes eingetragen sind. Ein x, y-Wertepaar zusammen mit einem zugehörigen z-Wert ergeben jeweils einen Höhepunkt. Die jeweiligen Werte in der Tabelle der Fig. 1 sind dabei für die Zwecke des vorliegenden Beispiels ausgewählt.

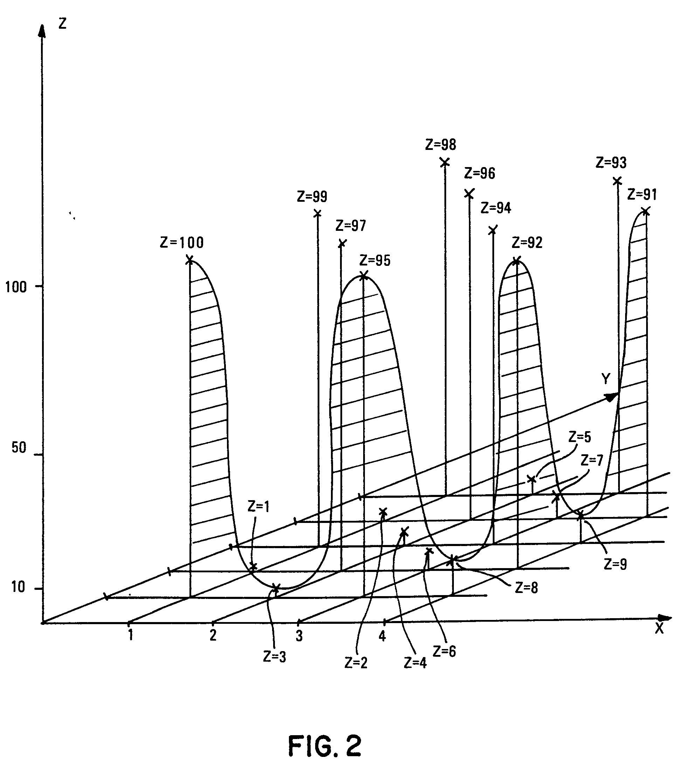

In der Fig. 2 ist ein dreidimensionales x, y, z-Koordinatensystem gezeigt, in das die Höhepunkte der Tabelle der Fig. 1 eingetragen sind. Werden diese Höhepunkte in allen Richtungen miteinander verbunden, so entsteht daraus eine wellenförmige Fläche, wie dies in Fig. 2 schematisch angedeutet ist. Diese Fläche ist mit der Oberfläche einer aus Bergen und Tälern bestehenden Landschaft vergleichbar, wobei die Höhepunkte die höchsten Punkte der Berge oder die niedersten Punkte der Täler sein können.

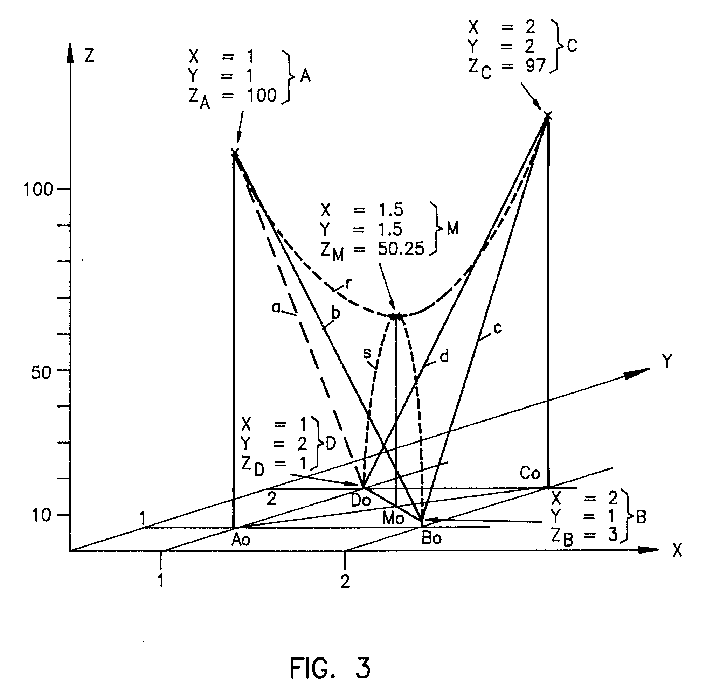

In der Fig. 3 sind vier Höhepunkte aus der Tabelle der Fig. 1 bzw. der dreidimensionalen Darstellung der Fig. 2 herausgegriffen. Die vier Höhepunkte sind über einer Masche des Rechtecksnetzes angeordnet und haben die folgenden Bezeichnungen und Koordinaten:
A(x = 1, y = 1, z_{A} = 100);
B(x = 2, y = 1, z_{B} = 3);
C(x = 2, y = 2, z_{C} = 97);
D(x = 1, y = 2, z_{D} = 1).

Die zugrunde liegende Masche des Rechtecksnetzes hat die folgenden Bezeichnungen und Koordinaten:
A₀(x = 1, y = 1);
B₀(x = 2, y = 1);
C₀(x = 2, y = 2);
D₀(x = 1, y = 2).

Die Verbindungslinien zwischen den Höhepunkten A, B, C und D sind wie folgt bezeichnet:
A-B mit b; B-C mit c; C-D mit d; D-A mit a.

Verbindet man die vier Höhepunkte A, B, C und D in allen Richtungen miteinander, so entsteht eine Sattelfläche. Dies ist in der Fig. 3 mit Hilfe der punktierten Linien r und s dargestellt, wobei r die Verbindungslinie zwischen den Höhepunkten A und C und s die Verbindungslinie zwischen den Höhepunkten B und D darstellt. Aufgrund der Wahl der z-Koordinaten der Höhepunkte A, B, C und D kann man sich die in Fig. 3 dargestellte Sattelfläche als ein quadratisches Blatt Papier vorstellen, bei dem zwei zueinander diagonal angeordnete Ecken nach oben und die anderen beiden diagonalen Ecken nach unten abgebogen sind. Die nach oben abgebogenen Ecken stellen die Höhepunkte A und C und die nach unten abgebogenen Ecken die Höhepunkte B und D dar.

Etwa in der Mitte des quadratischen Blattes Papier befindet sich ein Sattelpunkt M, der von den Biegungen unbeeinflußt bleibt.

Da in der Tabelle der Fig. 1 nur die Höhepunkte A, B, C und D enthalten sind, hängen alle weiteren Punkte der in der Fig. 3 dargestellten Sattelfläche, und damit insbesondere auch der Sattelpunkt M von der Art und Weise der Berechnung durch das Computersystem ab.

Erfindungsgemäß wird der Sattelpunkt M über dem Mittelpunkt M₀ der der Sattelfläche zugrundeliegenden Masche A₀, B₀, C₀ und D₀ des Rechtecksnetzes festgelegt. Dieser Mittelpunkt hat im vorliegenden Beispielsfall die folgenden Koordinaten:
M₀(x = 1,5, y = 1,5).

Des weiteren wird erfindungsgemäß der z_{M}-Wert, also die Höhe des Sattelpunktes M über dem Rechtecksnetz als Mittelwert der z-Werte, also der Höhen der Höhepunkte A, B, C und D der Sattelfläche festgelegt. Der Mittelwert der z-Werte der Höhepunkte A, B, C und D ist im vorliegenden Beispielsfall
(100 + 3 + 97 + 1) : 4 = 50,25.

Der Sattelpunkt M der Fig. 3 hat somit die folgenden Koordinaten:
M(x = 1,5, y = 1,5, z_{M} = 50,25).

Die erfindungsgemäße Festlegung des z_{M}-Wertes des Sattelpunktes M als Mittelwert der z-Werte der Höhepunkte der Sattelfläche ist an sich willkürlich. Es hat sich jedoch herausgestellt, daß diese Festlegung am ehesten den natürlichen Verhältnissen entspricht. Würde man beispielsweise die Verbindungslinien a, b, c und d der Höhepunkte A, B, C und D als Drahtmodell herstellen, und würde man versuchen, die damit gegebene Sattelfläche beispielsweise mit Hilfe einer Seifenblase oder dergleichen zwischen den Drähten zu erzeugen, so würde sich eine Sattelfläche kleinsten Inhalts ergeben. In dem dreidimensionalen Koordinatensystem der Fig. 3 hätte diese "natürliche" Sattelfläche einen Sattelpunkt, der im wesentlichen dem erfindungsgemäß festgelegten Sattelpunkt entsprechen würde.

Es ist jedoch auch möglich, daß als z-Wert des Sattelpunktes M andere Werte gewählt werden. Dies hat dann zur Folge, daß die zugehörigen Sattelflächen jeweils verschieden verlaufen. Diese verschiedenen Sattelflächen basieren jedoch ebenfalls auf den Werten der Tabelle der Fig. 1, so daß sie insofern nicht fehlerhaft, sondern höchstens "weniger natürlich" sind.

Die Art und Weise der Berechnung des z_{M}-Wertes des Sattelpunktes M ist für die nachfolgende Lösung des Problems der richtigen Bestimmung von Höhenlinien bei Sattelflächen nur von zweitrangiger Bedeutung; wesentlich ist, daß ein solcher z_{M}-Wert des Sattelpunktes M in irgendeinerweise vorhanden ist.

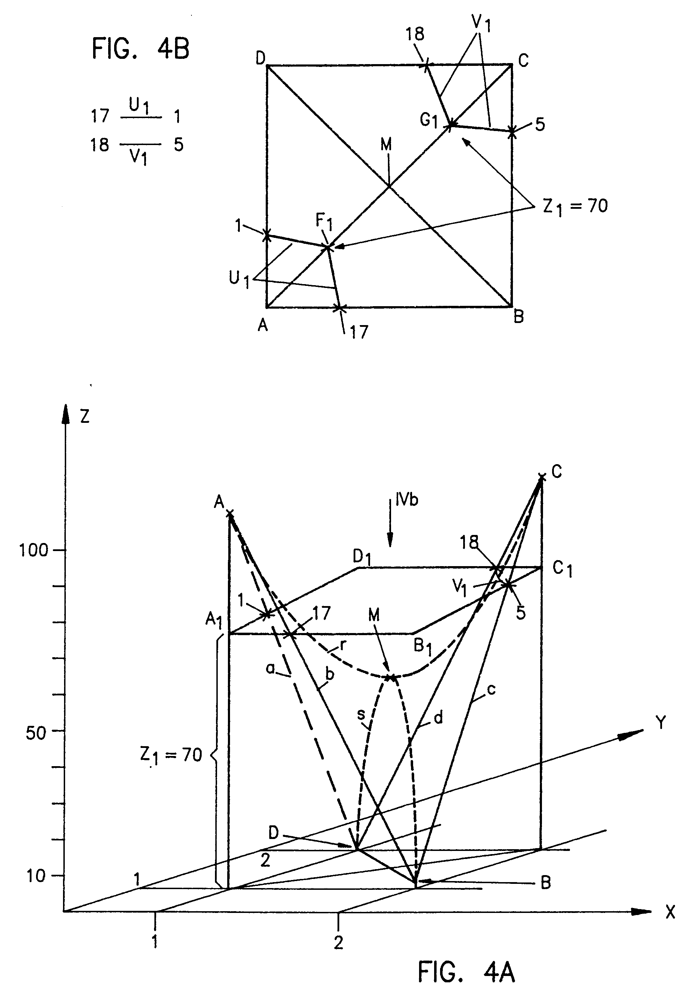

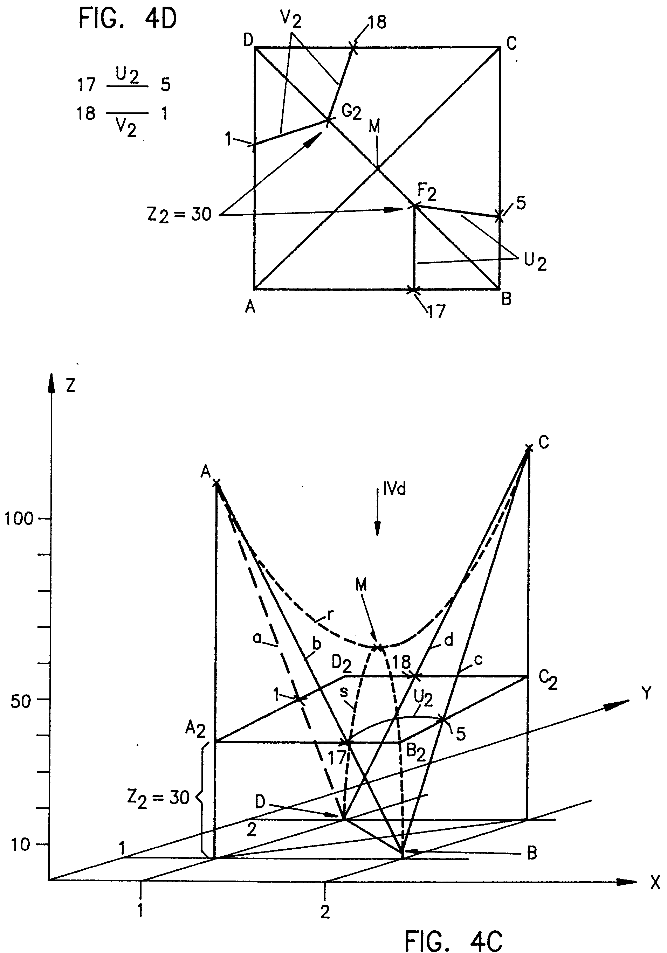

In der Fig. 4a ist die Sattelfläche der Fig. 3 nochmals dargestellt. Wie schon erläutert wurde, wird diese Sattelfläche von den Höhepunkten A, B, C und D aufgespannt und wird des weiteren von den Verbindungslinien a, b, c, d, r und s begrenzt.

Es sollen nun bestimmte Höhenlinien dieser Sattelfläche berechnet und dargestellt werden. Eine Höhenlinie ist dabei diejenige Linie, die entsteht, wenn die Sattelfläche mit einer Ebene bestimmter Höhe geschnitten wird.

In der Fig. 4a ist diese Schnittebene durch die Punkte A₁, B₁, C₁ und D₁ festgelegt. Die Schnittebene ist parallel zur x, y-Ebene angeordnet, und zwar in einem Abstand von z₁ = 70. Es sollen also die Höhenlinien der Sattelfläche bei z₁ = 70 berechnet werden.

Das Computersystem vereinfacht diese Berechnung zumindest in einem ersten Schritt insoweit, daß es nicht sofort die gesamten Höhenlinien berechnet, sondern daß es zuerst nur die Schnittpunkte der Ebene A₁, B₁, C₁, D₁ mit den Verbindungslinien a, b, c, d, der Höhepunkte der Sattelfläche berechnet. Diese Berechnung ist bekannt und soll nicht weiter erläutert werden. Das Ergebnis dieser Berechnung sind die Schnittpunkte 17, 5, 18 und 1. Wie in der Fig. 4a dargestellt ist, entsteht der Schnittpunkt 17 aus dem Schnitt der Ebene A₁, B₁, C₁, D₁ mit der Verbindungslinie b der Höhepunkte A und B, der Schnittpunkt 5 aus dem Schnitt dieser Ebene mit der Verbindungslinie c, der Schnittpunkt 18 aus dem Schnitt dieser Ebene mit der Verbindungslinie d und der Schnittpunkt 1 aus Schnitt dieser Ebene mit der Verbindungslinie a.

Die Fig. 4b zeigt eine Draufsicht aus der Richtung IVb auf die in Fig. 4a dreidimensional dargestellte Sattelfläche. In der Fig. 4b sind wiederum die Höhepunkte A, B, C und D dieser Sattelfläche sowie der Sattelpunkt M eingezeichnet. Des weiteren sind in der Fig. 4b die Schnittpunkte 17, 5, 18 und 1 der Sattelfläche mit der Schnittebene der Höhe z₁ = 70 dargestellt.

Bevor die weiteren Punkte und Linien insbesondere der Fig. 4b erläutert werden, soll vorher noch anhand der Fign. 4c und 4d das Problem beschrieben werden, das sich dem Computersystem bei der Berechnung der Höhenlinien der gezeigten Sattelfläche stellt.

In der Fig. 4c ist in gleicher Weise wie in der Fig. 4a die Sattelfläche der Fig. 3 in einer dreidimensionalen Ansicht dargestellt. Die Ebene, mit der in der Fig. 4c die Sattelfläche geschnitten wird, ist durch die Punkte A₂, B₂, C₂, D₂ festgelegt. Diese Ebene ist wie in der Fig. 4a parallel zur x, y-Ebene angeordnet, sie weist jedoch im Unterschied zur Fig. 4a in der Fig. 4c nur eine Höhe von z₂ = 30 auf.

Wie bereits erläutert wurde, kann das Computersystem in bekannter Weise die Schnittpunkte der Ebene A₂, B₂, C₂, D₂ mit den Verbindungslinien a, b, c, d der Sattelfläche berechnen. Diese Schnittpunkte sind in den Fign. 4c und 4d in gleicher Weise gekennzeichnet wie in den Fign. 4a und 4b, nämlich als Schnittpunkte 17, 5, 18 und 1.

In beiden Fällen, also bei einer Schnittebene der Höhe Z₁ = 70 gemäß den Fign. 4a und 4b, wie auch bei einer Schnittebene der Höhe z₂ = 30 gemäß den Fign. 4c und 4d, erhält das Computersystem als Ergebnis seiner Berechnungen jeweils die 4 Schnittpunkte 17, 5, 18 und 1, die in ihren Werten in beiden Fällen wohl unterschiedlich sein können, jedoch als solche in jedem Fall vorhanden sind.

Aus der Tatsache, daß genau vier Schnittpunkte vorhanden sind, ergibt sich für das Computersystem, daß es sich bei der von den Höhepunkten A, B, C und D aufgespannten Fläche um eine Sattelfläche handeln muß, mit der Folge, daß diese vier berechneten Schnittpunkte zu zwei Höhenlinien verbunden werden müssen.

Dies ergibt sich auch aus den Fign. 4a bis 4d. Die Schnittebene bei z₁ = 70 gemäß der Fig. 4a hat zur Folge, daß als Höhenlinien u₁, v₁ nur die Verbindungslinien zwischen den Schnittpunkten 17 und 1 sowie den Schnittpunkten 18 und 5 entstehen können, wie dies insbesondere in der Fig. 4b gezeigt ist. Demgegenüber hat die Schnittebene bei z₂ = 30 gemäß der Fig. 4c zur Folge, daß als Höhenlinien u₂, v₂ nur die Verbindungslinien zwischen den Schnittpunkten 17 und 5 und den Schnittpunkten 18 und 1 entstehen können.

In beiden Fällen, also bei z₁ = 70 und bei z₂ = 30 entstehen also jeweils zwei Höhenlinien. Es entstehen jedoch nicht dieselben Höhenlinien, sondern die Höhenlinien u₁, v₁ im ersten Fall stellen genau die "entgegengesetzten" Verbindungen der Schnittpunkte 17, 5, 18 und 1 dar als die Höhenlinien u₂, v₂ im zweiten Fall.

Das Problem, das das Computersystem lösen muß, besteht also darin, die vier berechneten Schnittpunkte richtig zu zwei Höhenlinien zu verbinden. Erfindungsgemäß wird dieses Problem mit Hilfe des Sattelpunktes M, insbesondere des z_{M}-Wertes also der Höhe der Sattelpunktes gelöst.

Wie bereits erläutert wurde, existieren für das Computersystem zwei Möglichkeiten, die Schnittpunkte 17, 5, 18 und 1 zu zwei Höhenlinien miteinander zu verbinden, nämlich entweder im Falle der Fign. 4a und 4b die Schnittpunkte 17 und 1 und die Schnittpunkte 18 und 5 zu den Höhenlinien u₁ und v₁ oder im Falle der Fign. 4c und 4d die Schnittpunkte 17 und 5 und die Schnittpunkte 18 und 1 zu den Höhenlinien u₂ und v₂. Die Entscheidung, welche der Höhenlinien die richtigen sind, trifft das Computersystem mit Hilfe der Höhe z_{M} des Sattelpunkte M.

Zu diesem Zweck vergleicht das Computersystem im Falle der Fign. 4a und 4b die Höhe z_{M} des Sattelpunktes M beispielsweise mit der Höhe z_{A} des Höhepunktes A sowie mit der Höhe z₁ der Schnittebene A₁, B₁, C₁, D₁. Befindet sich die Höhe z₁ zwischen der Höhe z_{M} und der Höhe z_{A}, so bedeutet dies, daß auch auf der Verbindungslinie des Höhepunktes A und des Sattelpunktes M ein Schnittpunkt mit der Schnittebene A₁, B₁, C₁, D₁ existiert. Da im vorliegenden Beispielsfall z_{A} = 100, Z_{M} = 50,25 und Z₁ = 70 ist, hat dies zur Folge, daß z₁ zwischen Z_{M} und z_{A} liegt, und daß also auf der Verbindungslinie des Höhepunktes A und des Sattelpunktes M ein Schnittpunkt mit der Schnittebene A₁, B₁, C₁, D₁ vorhanden ist. Dieser Schnittpunkt ist in der Fig. 4b mit F₁ gekennzeichnet.

Die Tatsache, daß dieser Schnittpunkt F₁ auf der Verbindungslinie des Höhepunktes A und des Sattelpunktes M vorhanden ist, hat zur Folge, daß die Höhenlinie u₁ über diesen Schnittpunkt F₁ führen muß. Dies ist in der Fig. 4b dadurch angedeutet, daß der Schnittpunkt 17 und der Schnittpunkt F₁ sowie dieser Schnittpunkt F₁ und der Schnittpunkt 1 durch Geradenstücke miteinander verbunden sind. Die gesamte Verbindungslinie der Schnittpunkte 17 und 1 über den Schnittpunkt F₁ stellt die Höhenlinie u₁ dar.

Entsprechend kann die Höhenlinie v₁ durch den Vergleich der Höhe z_{M} mit der Höhe z_{C} des Höhepunktes C und der Höhe z₁ der Schnittebene A₁, B₁, C₁, D₁ erzeugt werden. Die Höhenlinie v₁ besteht dabei gemäß der Fig. 4b aus den geraden Stücken zwischen dem Schnittpunkt 18 und dem Schnittpunkt G₁ sowie diesem Schnittpunkt G₁ und dem Schnittpunkt 5.

Wird hingegen der beschriebene Vergleich auf die Höhepunkte B oder D angewendet, so ergibt sich daraus keine Höhenlinie. Die Höhe z₁ = 70 befindet sich nämlich nicht zwischen der Höhe z_{M} 50,25 und der Höhe z_{B} = 3 bzw. z_{D} = 1 der Höhepunkte B bzw. D. Dies hat zur Folge, daß kein Schnittpunkt existiert zwischen den Verbindungslinien des Sattelpunktes M und den Höhepunkten B bzw. D mit der Schnittebene A₁, B₁, C₁, D₁. Da also auf diesen Verbindungslinien kein Punkt mit der Höhe Z₁ = 70 vorhanden ist, kann über diese Verbindungslinien auch keine Höhenlinie mit dieser Höhe z₁ = 70 verlaufen. Die Höhenlinien dürfen also diese Verbindungslinien nicht schneiden.

Mit Hilfe der Prüfung, ob die Höhe der Schnittebene zwischen der Höhe des Sattelpunktes und der Höhe eines der Höhepunkte liegt, kann also das Computersystem entscheiden, ob eine Höhenlinie über die Verbindungslinie des Sattelpunktes und dieses einen Höhepunktes laufen muß oder nicht. Muß die Höhenlinie diese Verbindungslinie schneiden, so kann das Computersystem die beiden zu dieser Verbindungslinie benachbarten Schnittpunkte zu einer Höhenlinie miteinander verbinden. Darf diese Verbindungslinie hingegen nicht von einer Höhenlinie geschnitten werden, so kann das Computersystem diejenigen Schnittpunkte zu zwei Höhenlinien miteinander verbinden, von denen jeweils nur ein Schnittpunkt zu der Verbindungslinie benachbart ist.

Anhand der Fig. 4c soll dieses Prüfungsverfahren nochmals kurz bildlich erläutert werden. Durch den Vergleich der Höhe z_{M} = 50,25 des Sattelpunktes M mit der Höhe z_{B} = 3 des Höhepunktes B und der Höhe z₂ = 30 der Schnittebene A₂, B₂, C₂, D₂ ergibt sich, daß der Sattelpunkt M sich oberhalb und der Höhepunkt B sich unterhalb der Schnittebene A₂, B₂, C₂, D₂ befindet. Dies hat zur Folge, daß die Verbindungslinie des Sattelpunktes M und des Höhepunkte B von der Schnittebene A₂, B₂, C₂, D₂ geschnitten wird, und zwar gemäß der Fig. 4d in dem Schnittpunkt F₂. Die Höhenlinie u₂ muß also über diesen Schnittpunkt F₂ verlaufen und ist in der Fig. 4d durch Geradenstücke zwischen dem Schnittpunkt 17 und dem Schnittpunkt F₂ und zwischen diesem Schnittpunkt F₂ und dem Schnittpunkt 5 dargestellt. Demgegenüber ergibt der Vergleich der Höhe z_{A} = 100 des Höhepunktes A mit der Höhe z_{M} 50,25 des Sattelpunktes M und der Höhe z₂ = 30 der Schnittebene A₂, B₂, C₂, D₂, daß die Höhe z₂ nicht zwischen den Höhen z_{A} und z_{M} liegt. Dies hat zur Folge, daß die Verbindungslinie des Höhepunktes A und des Sattelpunktes M von keiner Höhenlinie geschnitten sein darf.

Auf diese Weise kann also das Computersystem für jede Masche, also für jedes kleinste Viereck des Rechtecksnetzes die beiden richtigen Höhenlinien berechnen. Als Ergebnis entstehen daraus durch ein Aneinandersetzen dieser Höhenlinien die gesamten Höhenlinien-Polygonzüge, wobei es sich dabei um offene oder um geschlossene Polygonzüge handeln kann.

In der Fig. 5a ist die Tabelle der Fig. 1 nochmals gezeigt, wobei jedoch zusätzlich zu den z-Werten noch die Nummern sämtlicher Schnittpunkte eingetragen sind, die sich bei einem Schnitt der durch die Tabelle der Fig. 1 festgelegten wellenförmigen Fläche ergeben. Die Reihenfolge der Nummern die Schnittpunkte wurde dabei willkürlich gewählt, indem in der Tabelle der Fig. 5a links unten begonnen und dann spaltenweise durchnummeriert wurde.

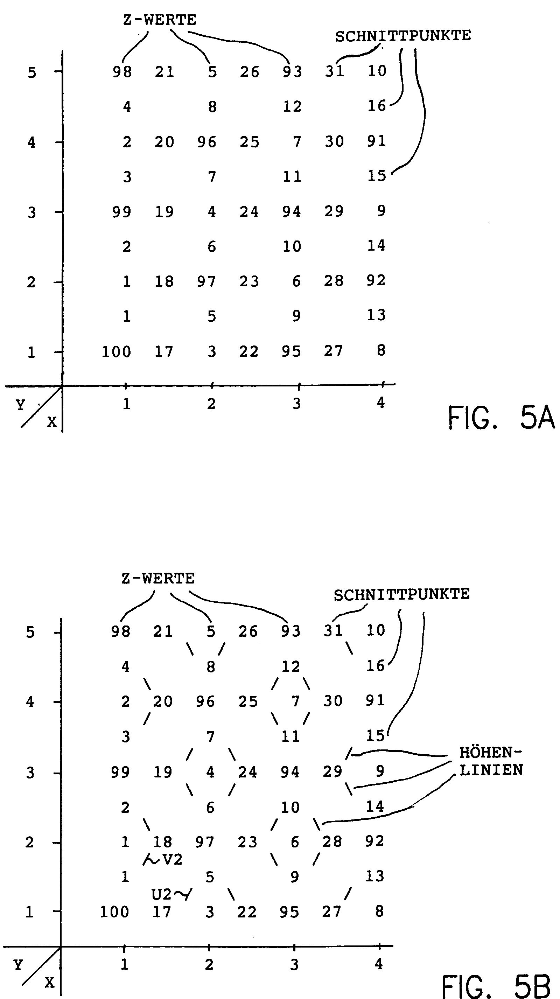

In der Fig. 5b sind im Vergleich zur Fig. 5a für den zweiten Fall der Fign. 4c und 4d die einzelnen Höhenlinien zwischen den Schnittpunkten zusätzlich schematisch eingetragen, also die Höhenlinie u₂ zwischen den Schnittpunkten 17 und 5, die Höhenlinie v₂ zwischen den Schnittpunkten 18 und 1, usw. Insgesamt ergeben sich in der Fig. 5b offene Höhenlinien-Polygonzüge, beispielsweise vom Schnittpunkt 1 über den Schnittpunkt 18 zum Schnittpunkt 2, sowie geschlossene Höhenlinien-Polygonzüge, beispielsweise vom Schnittpunkt 9 über den Schnittpunkt 28, den Schnittpunkt 10 und den Schnittpunkt 23 wieder zurück zum Schnittpunkt 9. Aus der Fig. 5b wird auf diese Weise ersichtlich, daß in dem vorliegenden zweiten Fall, bei dem die Höhe z₂ = 30 der Schnittebene kleiner ist als die Höhe z_{M} = 50,25 des Sattelpunktes M, die Höhenlinien sich kreisförmig um die "niederen" Höhepunkte erstrecken.

Wäre die Höhe der Schnittebene größer als die Höhe des Sattelpunktes M, wie dies im ersten Fall den Fig. 4a und 4b gegeben ist, so hätte dies zur Folge, daß sich die Höhenlinien kreisförmig um die "hohen" Höhepunkte erstrecken würden.

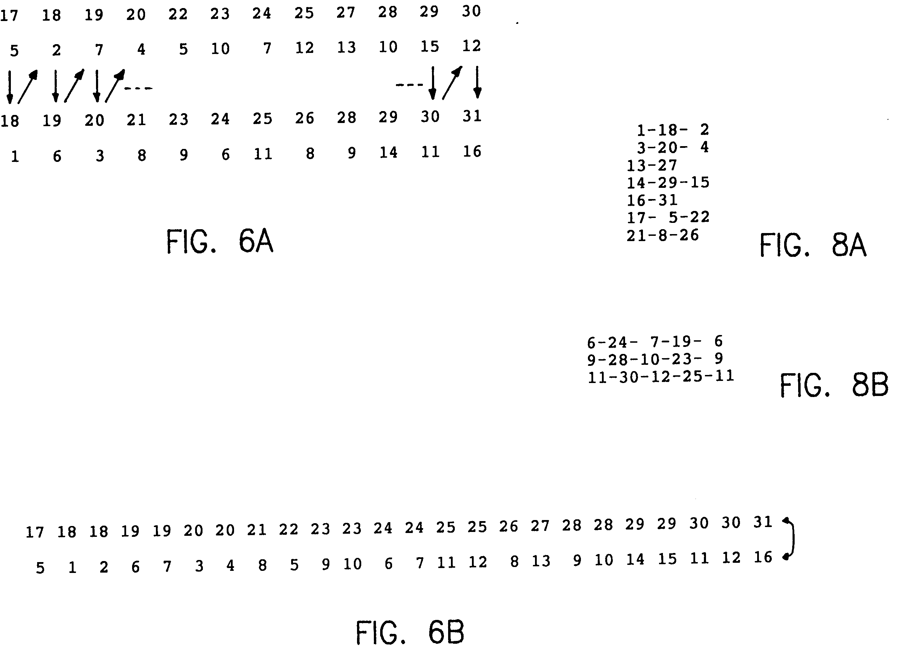

In der Fig. 6a sind sämtliche Schnittpunkte der Schnittebene des zweiten Falles gemäß den Fign. 4c und 4d mit der Sattelfläche enthalten. Die Schnittpunkte sind paarweise angeordnet, wobei immer zwei Schnittpunkte, die über eine Höhenlinie miteinander verbunden sind, ein Paar bilden. Insgesamt sind somit in der Fig. 6a mit Hilfe dieser Schnittpunkt-Paare sämtliche Höhenlinien enthalten, die in der Fig. 5b schematisch durch Verbindungslinien dargestellt sind.

Die Schnittpunkt-Paare sind in der Fig. 6a derart angeordnet, daß in den ersten beiden Zeilen zuerst derjenige Schnittpunkt angegeben ist, der sich in der Fig. 5b links unten in dem x, y-Koordinatensystem befindet; dies ist der Schnittpunkt 17. Diesem Schnittpunkt ist in den ersten beiden Zeilen der Fig. 6a derjenige Schnittpunkt zugeordnet, der sich in der Fig. 5b über eine Höhenlinie oberhalb des ausgehenden Schnittpunkts befindet; dies ist vorliegend der Schnittpunkt 5. Danach befindet sich in den ersten beiden Zeilen der Fig. 6a der oberhalb des Schnittpunkts 17 in derselben Spalte angeordnete Schnittpunkt 18 zusammen mit dem wiederum oberhalb des Schnittpunkts 18 angeordneten zugehörigen Schnittpunkt 2. Diese Anordnung der ersten beiden Zeilen der Fig. 6a wird entsprechend der Spalten der Fig. 5b fortgesetzt, und zwar bis zum vorletzten Schnittpunkt 30 in der letzten Spalte der Fig. 5b, dem darüber der Schnittpunkt 12 zugeordnet ist. Da der Schnittpunkt 31 keinen oberhalb angeordneten zugehörigen Schnittpunkt aufweist, ist dieser Schnittpunkt 31 in den ersten beiden Zeilen der Fig. 6a nicht enthalten.

Die nächsten beiden Zeilen der Fig. 6a ergeben sich in entsprechender Weise, wobei jedoch hier nicht der oberhalb angeordnete zugehörige Schnittpunkt ausgewählt wird, sondern der jeweils unterhalb des Ausgangsschnittpunkts über eine Höhenlinie angeordnete Schnittpunkt. Dies ist beispielsweise bei dem Schnittpunkt 18 der unterhalb angeordnete zugehörige Schnittpunkt 1. Da der Schnittpunkt 17 keinen zugehörigen unterhalb angeordneten Schnittpunkt aufweist, ist er in den letzten beiden Zeilen der Fig. 6a nicht enthalten. Der letzte Schnittpunkt in diesen letzten beiden Zeilen der Fig. 6a ist der Schnittpunkt 31, dem der unterhalb angeordnete zugehörige Schnittpunkt 16 zugeordnet ist.

Aus diesen zwei mal zwei Zeilen der Fig. 6a werden durch Umordnung die beiden Zeilen der Fig. 6b erzeugt. Dies geschieht dadurch, daß in der Fig. 6b mit dem ersten Schnittpunkt-Paar 17 - 5 der ersten beiden Zeilen der Fig. 6a begonnen wird, um danach das ebenfalls erste Schnittpunkt-Paar 18 - 1 der zweiten beiden Zeilen anzufügen. Fortgesetzt werden die beiden Zeilen der Fig. 6b mit dem zweiten Schnittpunkt-Paar 18 - 2 der ersten beiden Zeilen der Fig. 6a, dem zweiten Schnittpunkt-Paar 19 - 6 der zweiten beiden Zeilen der Fig. 6a, usw.. Insgesamt werden also die Schnittpunkt-Paare der zweiten beiden Zeilen der Fig. 6a zwischen die Schnittpunkt-Paare der ersten beiden Zeilen der Fig. 6a eingefügt. Die Anzahl der Schnittpunkt-Paare, wie auch die Schnittpunkt-Paare als solche bleiben unverändert.

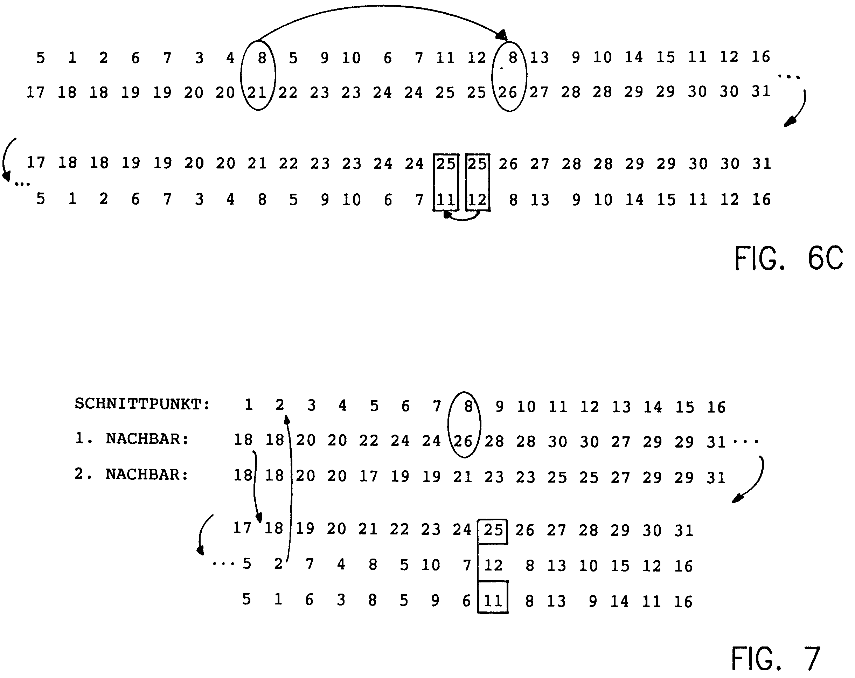

Aus den beiden Zeilen der Fig. 6b werden nunmehr die beiden Zeilen der Fig. 6c durch ein Aneinanderreihen und Vertauschen von Schnittpunkt-Paaren erzeugt. Zu diesem Zweck werden die beiden Zeilen der Fig. 6b miteinander vertauscht, so daß die Zeile mit den Schnittpunkten 5, 1, 2, 6, usw. danach in der oberen Zeile steht. An diese beiden vertauschten Zeilen der Fig. 6b werden nunmehr noch die unvertauschten beiden Zeilen der Fig. 6b angehängt. Es entsteht dadurch die doppelte Anzahl von Schnittpunkt-Paaren. Wie der Fig. 6c zu entnehmen ist, haben sich dabei jedoch die Schnittpunkt-Paare als solche nicht verändert, wenn man davon absieht, daß die Schnittpunkte dieser Schnittpunkt-Paare in der ersten Hälfte der beiden Zeilen der Fig. 6c vertauscht sind.

In der Fig. 7 ist eine Tabelle gezeigt, in der sämtliche Schnittpunkte nacheinander aufgelistet sind, wobei jedem der Schnittpunkte jeweils die zugehörigen Nachbar-Schnittpunkte zugeordnet sind.

Die Tabelle der Fig. 7 ergibt sich aus den beiden Zeilen von Schnittpunkt-Paaren der Fig. 6c durch einen Auslese- und gegebenenfalls Überschreib-Vorgang.

Der erste Nachbar zu dem Schnittpunkt 1 wird beispielsweise dadurch erhalten, daß in der oberen Zeile der beiden Zeilen der Fig. 6 der Schnittpunkt 1 gesucht wird. Dieser Schnittpunkt 1 ist in den beiden Zeilen der Fig. 6c in dem zweiten Schnittpunkt-Paar enthalten, wobei dem Schnittpunkt 1 der Schnittpunkt 18 zugeordnet ist. Ansonsten ist in der oberen Zeile der beiden Zeilen der Fig. 6 der Schnittpunkt 1 nicht mehr angegeben. Somit kann als erster Nachbar des Schnittpunkts 1 der zugeordnete Schnittpunkt 18 in die Tabelle der Fig. 7 eingetragen werden. Entsprechend wird für den Schnittpunkt 8 in den beiden Zeilen der Fig. 6c der zugeordnete Schnittpunkt 21 aufgefunden, wenn man vom linken Ende der beiden Zeilen zu suchen beginnt. Setzt man diese Suche jedoch in der angegebenen Richtung, also von links nach rechts fort, so findet man den Schnittpunkt 8 noch ein zweites Mal in der oberen Zeile der beiden Zeilen der Fig. 6c. Diesem zweiten Schnittpunkt 8 ist der Schnittpunkt 26 zugeordnet. In der Tabelle der Fig. 7 wird nunmehr nicht der zuerst gefundene zugeordnete Schnittpunkt 21 eingetragen, sondern es wird als erster Nachbar des Schnittpunkts 8 der danach aufgefundene zugeordnete Schnittpunkt 26 eingetragen. Der zuerst aufgefundene zugeordnete Schnittpunkt 21 wird also mit diesem Schnittpunkt 26 überschrieben.

Auf diese Weise können zu sämtlichen Schnittpunkten 1 bis 31 die jeweils zugehörigen ersten Nachbarn aus den beiden Zeilen der Fig. 6c ermittelt und in die Tabelle der Fig. 7 eingetragen werden.

Für die Ermittlung der zweiten Nachbarn kann entsprechend vorgegangen werden, mit der einzigen Ausnahme, daß bei dem Überschreib-Vorgang nicht von links nach rechts, sondern von rechts nach links in den beiden Zeilen der Fig. 6c gesucht wird. So wird beispielsweise für den Schnittpunkt 25 zuerst der zugeordnete Schnittpunkt 12 in den beiden Zeilen der Fig. 6c aufgefunden, wenn von rechts nach links gesucht wird. Die weitere Suche ergibt jedoch, daß der Schnittpunkt 25 in dieser Suchrichtung danach nochmals auftritt, wobei dort der Schnittpunkt 11 zugeordnet ist. Aus diesem Grund wird in die Tabelle der Fig. 7 als zweiter Nachbar des Schnittpunkts 25 nicht der zuerst aufgefundene Schnittpunkt 12, sondern der danach aufgefundene Schnittpunkt 11 eingetragen.

Es können auf diese Weise zu sämtlichen Schnittpunkten 1 bis 31 jeweils auch die zweiten Nachbarn mit Hilfe der beiden Zeilen der Fig. 6c in die Tabelle der Fig. 7 eingetragen werden.

Die Tabelle der Fig. 7 enthält damit Nachbarschaftsbeziehungen zwischen den einzelnen Schnittpunkten, die dazu verwendet werden können, die die Schnittpunkte verbindenden Höhenlinien-Polygonzüge auf dem Datenausgabegerät des Computersystems anzuzeigen.

Zu diesem Zweck beginnt das Computersystem in der Tabelle der Fig. 7 mit dem Schnittpunkt 1. Diesem Schnittpunkt 1 ist als erster, wie auch als zweiter Nachbar der Schnittpunkt 18 zugeordnet. Dies bedeutet, daß es sich bei dem Schnittpunkt 1 um einen Rand-Schnittpunkt handelt. Nunmehr sucht das Computersystem in der Tabelle der Fig. 7 den Schnittpunkt 18 und erhält als ersten Nachbarn den Schnittpunkt 2 sowie als zweite Nachbarn den Schnittpunkt 1. Daß der Schnittpunkt 1 ein Nachbar des Schnittpunkts 18 ist, ist schon aus der ersten genannten Nachbarschaftsbeziehung bekannt. Deshalb wird nunmehr nur die zweite Nachbarschaftsbeziehung verwertet, nämlich daß der Schnittpunkt 18 als weiteren Nachbar den Schnittpunkt 2 besitzt. Sucht das Computersystem schließlich den Schnittpunkt 2 auf, so stellt es fest, daß der Schnittpunkt 2 als ersten, wie auch als zweiten Nachbar den Schnittpunkt 18 besitzt, was wiederum bedeutet, daß der Schnittpunkt 2 ein Rand-Schnittpunkt ist.

Insgesamt ergibt sich somit aus der Tabelle der Fig. 7 die Aufeinanderfolge der Schnittpunkte 1 - 18 - 2, wobei die Schnittpunkte 1 und 2 Rand-Schnittpunkte sind. Diese Aufeinanderfolge hat die Bedeutung eines offenen Höhenlinien-Polygonzugs, der von dem Schnittpunkt 1 über den Schnittpunkt 18 zu dem Schnittpunkt 2 führt.

Dieser offene Höhenlinien-Polygonzug 1 - 18 - 2 ist in der Fig. 8a aufgelistet. Die weiteren dort genannten offenen Höhenlinien-Polygonzüge ergeben sich in entsprechender Weise aus der Tabelle der Fig. 7, wobei diese offenen Polygonzüge in einfacher Weise dadurch aufgefunden werden können, daß bei ihren Rand-Schnittpunkten der erste und der zweite Nachbar immer gleich sind.

Nachdem alle offenen Polygonzüge aufgefunden worden sind, können nunmehr die geschlossenen Höhenlinien-Polygonzüge gesucht werden. Diese sind aus der Tabelle der Fig. 7 in gleicher Weise herleitbar wie die offenen Polygonzüge, indem an irgend einem Schnittpunkt des geschlossenen Polygonzugs begonnen wird.

So weist beispielsweise der Schnittpunkt 6 in der Tabelle der Fig. 7 als ersten Nachbarn den Schnittpunkt 24 auf. Der Schnittpunkt 24 besitzt als ersten Nachbarn den Schnittpunkt 7. Dieser Schnittpunkt 7 weist als ersten Nachbarn den bereits bekannten Schnittpunkt 24 auf, als zweiten Nachbarn jedoch den noch nicht bekannten Schnittpunkt 19. Der Schnittpunkt 19 weist als ersten Nachbarn den bereits bekannten Schnittpunkt 7 und als zweiten Nachbarn den ebenfalls bereits bekannten Schnittpunkt 6 auf. Der Schnittpunkt 6 stellt dabei den Ausgangs-Schnittpunkt dar, so daß nunmehr der Polygonzug geschlossen ist. Insgesamt ergibt sich auf diese Weise ein Höhenlinien-Polygonzug mit den Schnittpunkten 6 - 24 - 7 - 19 - 6.

Dieser geschlossene Höhenlinien-Polygonzug ist in der Fig. 8b aufgelistet. Die anderen beiden in der Fig. 8b angegebenen geschlossenen Polygonzüge ergeben sich aus der Tabelle der Fig. 7 in entsprechender Weise.

Die Tabelle der Fig. 7 ist zweckmäßigerweise im Speicher des Computersystems abgespeichert. Es versteht sich, daß die Tabelle der Fig. 7 auch in einer anderen Anordnung abgespeichert sein kann. Wesentlich ist, daß zu jedem Schnittpunkt die zugehörige Nachbarschaftsbeziehung im Speicher des Computersystems enthalten ist. Zur Ausgabe der Höhenlinien-Polygonzüge auf dem Datenausgabegerät, insbesondere auf einem Bildschirm mit Speicherwirkung, ist es dann nur noch erforderlich, aus diesen Nachbarschaftsbeziehungen in der erläuterten Art und Weise die Höhenlinien-Polygonzüge abzuleiten und an das Datenausgabegerät auszugeben.

## Patentansprüche

1. Verfahren zur digitalen Erzeugung von Höhenlinien aus Höhepunkten über einem Mehrecksnetz,
wobei vier Höhepunkte (A, B, C, D) eine Sattelfläche (A-B-C-D, r, s) über einem Viereck (A₀, B₀, C₀, D₀) des Mehrecksnetzes (x, y-Werte) aufspannen,
und wobei die Höhenlinien (u₁, v₁ bzw. u₂, v₂) diejenigen Linien sind, die durch einen Schnitt der Sattelfläche (A-B-C-D, r, s) mit einer Ebene (A₁-B₁-C₁-D₁ bzw. A₂-B₂-C₂-D₂ vorgegebener Höhe (z₁ bzw. z₂) entstehen,
mit den folgenden Schritten:
a) es werden die Schnittpunkte (17, 5, 18, 1) der die Sattelfläche (A-B-C-D, r, s) begrenzenden Verbindungslinien (a, b, c, d) mit der Ebene (A₁-B₁-C₁-D₁ bzw. A₂-B₂-C₂-D₂) vorgegebener Höhe (z₁ bzw. z₂) berechnet,
b) es wird die Höhe (z_{M}) eines über der Mitte des der Sattelfläche (A-B-C-D, r, s) zugrundeliegenden Vierecks (A0, B₀, C₀, D₀) angeordneten Sattelpunktes (M) als Mittelwert der Höhen (Z_{A}, Z_{B}, Z_{C}, Z_{D}) der Höhepunkte (A, B, C, D) der Sattelfläche (A-B-C-D, r, s) berechnet,
c) es wird die Höhe (z_{M}) des Sattelpunktes (M) mit einer der Höhen (z_{A}) der Höhepunkte (A) der Sattelfläche (A-B-C-D, r, s) und mit der vorgegebenen Höhe (z₁) der die Sattelfläche (A-B-C-D, r, s) schneidenden Ebene (A₁-A₁-C₁-D₁) verglichen,
d1) und falls die vorgegebene Höhe (z₁) zwischen der Höhe (z_{M}) des Sattelpunktes (M) und der Höhe (z_{A}) des Höhepunktes (A) liegt, so wird die Höhenlinie (u₁) derart als Verbindung zweier benachbarter Schnittpunkte (17, 1) festgelegt, daß sie die Verbindungslinie des Sattelpunktes (M) und des Höhepunktes (A) schneidet.

2. Verfahren nach Anspruch 1
mit dem weiteren Schritt:
d2) es wird die Höhenlinie (u₂ oder v₂) derart als Verbindung zweier benachbarter Schnittpunkte (17, 5 oder 18, 1) festgelegt, daß sie die Verbindungslinie des Sattelpunktes (M) und des Höhepunktes (A) nicht schneidet, falls die vorgegebene Höhe (z₂) nicht zwischen der Höhe (z_{M}) des Sattelpunktes (M) und der Höhe (z_{A}) des Höhepunktes (A) liegt.

3. Verfahren nach Anspruch 1 oder 2
mit den weiteren Schritten:
e) es wird der Schnittpunkt (F₁ oder G₁ bzw. F₂ oder G₂) der Verbindungslinie des Sattelpunktes (M) und des Höhepunktes (A, B, C, D) mit der Ebene (A₁-B₁-D₁-D₁ bzw. A₂-B₂-C₂-D₂) vorgegebener Höhe (z₁ bzw. z₂) berechnet,
f) und es wird die Höhenlinie (u₁ oder v₁ bzw. u₂ oder v₂) über diesen Schnittpunkt (F₁ oder G₁ bzw. F₂ oder G₂) geführt.

4. Verfahren nach einem der Ansprüche 1 bis 3
mit dem weiteren Schritt:
g) wird aus den über die Höhenlinien (u₁; v₁ bzw, u₂;v₂) miteinander verbundenen Schnittpunkten (17, 1; 18, 5 bzw. 17, 5; 18, 1) zu jedem Schnittpunkt (1, 2, 3, ... 30, 31) die beiden Nachbar-Schnittpunkte (s. Fig. 7) berechnet.

5. Verfahren nach Anspruch 4,
bei dem die beiden Nachbar-Schnittpunkte (s. Fig. 7) durch Ordnen, Mischen, Aneinanderreihen und Vertauschen der über die Höhenlinien (u₁; v₁ bzw. u₂; v₂) miteinander verbundenen Schnittpunkte (17, 1; 18, 5 bzw. 17, 5; 18, 1) ermittelt werden.

6. Verfahren nach Anspruch 4 oder 5
mit dem weiteren Schritt:
g) es werden die Höhenlinien (u₁; v₁ bzw. u₂; v₂) entsprechend den durch die Nachbar-Schnittpunkte (s. Fig. 7) festgelegten Beziehungen zu offenen und geschlossenen Höhenlinien-Polygonzügen (s. Fig. 8a und 8b) zusammengesetzt.

7. Computersystem zur Durchführung des Verfahrens nach einem der Ansprüche 1 bis 6,
folgendes enthaltend:
einen Speicher, in dem die Schnittpunkte (1, 2, 3, ... , 30, 31) und die jeweils zugehörigen Nachbar-Schnittpunkte (s. Fig. 7) abgespeichert sind,
und ein Datenausgabegerät, z.B. einen Bildschirm, mit dessen Hilfe die offenen und geschlossenen Höhenlinien-Polygonzüge (s. Fig. 8a und 8b) darstellbar sind.
